Europäisches Patentamt

European Patent Office

Office européen des brevets

(11) Veröffentlichungsnummer: **0 238 970 B1**

# (12) EUROPÄISCHE PATENTSCHRIFT

(45) Veröffentlichungstag der Patentschrift: **03.06.92**

(21) Anmeldenummer: **87103800.6**

(22) Anmeldetag: **16.03.87**

(51) Int. Cl.⁵: **B03C 3/38**, B03C 3/14, B01D 51/02

(54) Verfahren und Vorrichtung zur Agglomerierung von elektrisch ungleichförmig aufgeladenen, in Gasströmen suspendierten festen oder flüssigen Partikeln.

(30) Priorität: **26.03.86 CH 1211/86**

(43) Veröffentlichungstag der Anmeldung:
**30.09.87 Patentblatt 87/40**

(45) Bekanntmachung des Hinweises auf die
Patenterteilung:
**03.06.92 Patentblatt 92/23**

(84) Benannte Vertragsstaaten:
**CH DE ES GB IT LI SE**

(56) Entgegenhaltungen:
**WO-A-84/04052**
**CH-A- 235 276**
**DD-A- 144 509**
**DE-A- 2 646 798**
**GB-A- 809 397**

(73) Patentinhaber: **BBC Brown Boveri AG**
**Haselstrasse**
**CH-5401 Baden(CH)**

(72) Erfinder: **Hirth, Michael, Dr.**
**Weidweg 4**
**CH-5035 Unterentfelden(CH)**

Rank Xerox (UK) Business Services

## Beschreibung

Die Erfindung geht aus von einem Verfahren zur Agglomerierung von elektrisch ungleichnamig aufgeladenen Partikeln nach der Gattung des Oberbegriffs des Anspruchs 1 und von einer Vorrichtung zur Agglomerierung von Partikeln nach der Gattung des Oberbegriffs des Anspruchs 2.

In elektrostatischen Staubfiltern werden Partikel üblicherweise dadurch agglomeriert, dass zwei mit unterschiedlichen Vorzeichen aufgeladene Staubströme zusammengeführt werden, wobei sich die ungleichnamigen Partikel gegenseitig anziehen und zusammenballen. Die Aufladung der Partikel erfolgt in der Regel dadurch, dass jeder Staubstrom für sich durch eine mit einer Koronaentladung ausgerüstete Vorrichtung hindurchgeleitet wird (Vergl. zum Beispiel DD-PS 144 509).

Bei derartigen, aus Spitzen und Platten bestehenden Vorrichtungen wird stets ein Teil der aufgeladenen Partikel auf der Platte abgeschieden, was in Anbetracht der im vorliegenden Fall zu beabsichtigenden Wirkung unerwünscht ist. Sind die Partikel hochohmig, so baut sich innerhalb weniger Minuten eine Isolierschicht auf der Platte auf. Diese lädt sich elektrisch solange auf, bis es zu Teilentladungen innerhalb der Schicht kommt. Die Teilentladungen produzieren zur Spitze gegenpolare Ionen, welche die Aufladung der Staubpartikel erheblich absenken können.

Aus dem Stand der Technik sind mit Wechselspannung betriebene elektrostatische Staubfilter bekannt. Mit derartigen Vorrichtungen kann das die Aufladung der Partikel hemmende Rücksprühen weitgehend unterdrückt werden (Vergl. Dr.-Ing. Dieter Klumpp, "Staubaufladung und -abscheidung in Wechselfeldern und der Rücksprühmechanismus in Elektrofiltern", Abhandlungen des Instituts für Hochspannungstechnik und elektrische Anlagen, Herausgeber: O. Professor Dr.-Ing. H. Lau, Universität Karlsruhe, Nr. 28).

In der DE-A-26 46 798 wird eine Vorrichtung zur unipolaren periodischen Aufladung von Partikeln in einem Gasstrom beschrieben, wobei die Partikel nacheinander an Ionen aussendenden Sprühelektroden entgegengesetzter Polarität entlanggeführt werden. Die Sprühelektroden werden mit pulsierender Gleichspannung mit oder ohne Glättung betrieben. Wie aus den Figuren 1 und 2 dieser Druckschrift hervorgeht, werden demnach periodisch Partikel gleichnamiger Polarität gegen eine zu besprühende Wandoberfläche geschleudert. Alternativ ist ein Betrieb von 2 nebeneinander liegenden Vorrichtungen mit Ausstoss von ungleichnamig geladenen Partikeln vorgesehen.

Im vorliegenden Fall handelt es sich jedoch nicht darum, in einem Gastrom suspendierte Staubpartikel an festen Körpern abzuscheiden, sondern sie zu grösseren Agglomeraten zusammenzuballen und im übrigen im Gasstrom zu belassen.

Nach dem Vorstehenden besteht somit ein Bedürfnis, die Teilverfahren zur erfolgreichen und wirtschaftlichen elektrostatischen Entstaubung zu verfeinern und weiter zu entwickeln.

Der Erfindung liegt die Aufgabe zugrunde, ein Verfahren sowie eine Vorrichtung zur möglichst wirtschaftlichen Agglomerierung von in Gasströmen suspendierten festen oder flüssigen Partikeln unter Vermeidung ihrer Abscheidung anzugeben. Verfahren und Vorrichtung sollen einfach sein, eine hohe Ausbeute erzielen und aufwendige Apparaturen und Betriebsführungen vermeiden.

Diese Aufgabe wird durch die im kennzeichnenden Teil des Anspruchs 1 und des Anspruchs 2 angegebenen Merkmale gelöst.

Die Erfindung wird anhand des nachfolgenden, durch Figuren näher erläuterten Ausführungsbeispiels beschrieben.

Dabei zeigt:

Fig. 1    den grundsätzlichen Verfahrensablauf anhand eines schematisierten Kanalabschnitts,

Fig. 2    den schematischen Aufbau einer Vorrichtung zur Agglomerierung von Partikeln.

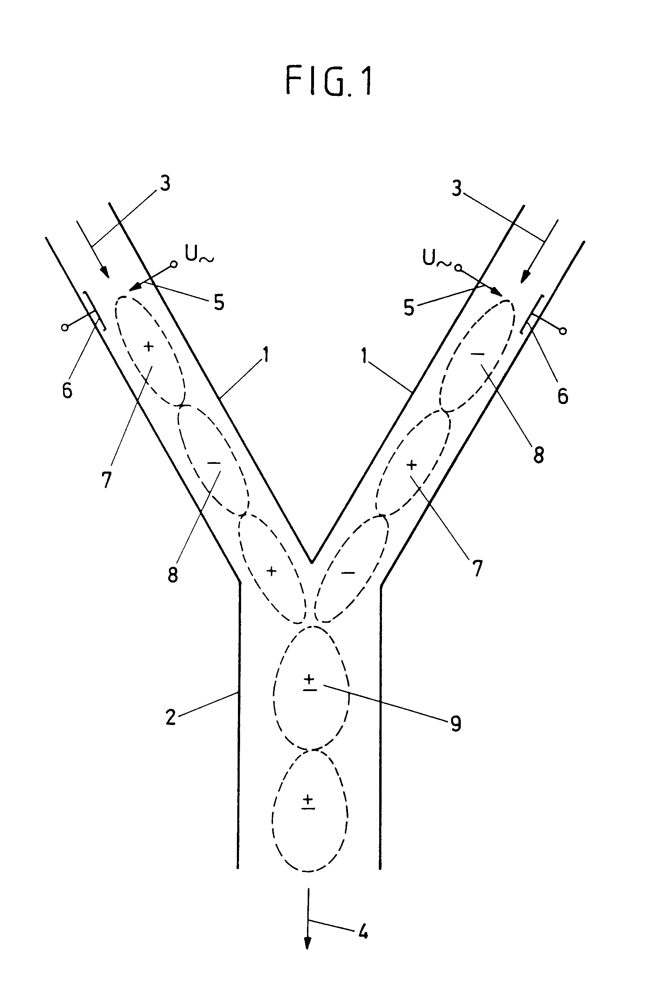

In Fig. 1 ist das Prinzip des Verfahrensablaufs bei der Agglomerierung von Partikeln in einem Gasstrom schematisch dargestellt. Der zu behandelnde Gesamtgasstrom wird in zwei gleiche Teilgasströme aufgeteilt. 1 ist ein Kanal für einen Teilgasstrom, 2 der Kanal für den Gesamtgasstrom. 3 stellt einen mit Partikeln beladenen Teilgasstrom vor der elektrostatischen Aufladung dar. Der Gesamtgasstrom nach der Agglomeration trägt das Bezugszeichen 4. 5 ist eine als Sprühelektrode ausgebildete Spitze, 6 die als Gegenelektrode dienende Platte. 7 stellt je eine Partikelwolke mit positiver, 8 je eine solche mit negativer Ladung dar. 7 und 8 wechseln sich mit fortschreitendem Gasstrom örtlich nach Massgabe der an die Elektroden 5 und 6 angelegten, zeitlich veränderlichen (meist sinusförmigen) Wechselspannung (Hochspannung) $U_{\approx}$ ab. Die Phasenlage der beiden, die Teilgasströme 3 zu beeinflussenden Spannungen $U_{\sim}$ ist derart bemessen, dass unter Berücksichtigung der Gasgeschwindigkeit und der geometrischen Abmessungen der Kanäle 1 (insbesondere deren Länge bis zum Punkt ihrer Vereinigung) stets eine Partikelwolke positiver Ladung mit einer solchen negativer Ladung zusammentreffen und umgekehrt. Beim Zusammentreffen (durch Symbol ± angedeutet) werden die neutralen Partikelwolken 9 gebildet, welche eine Agglomeration der Partikel darstellen.

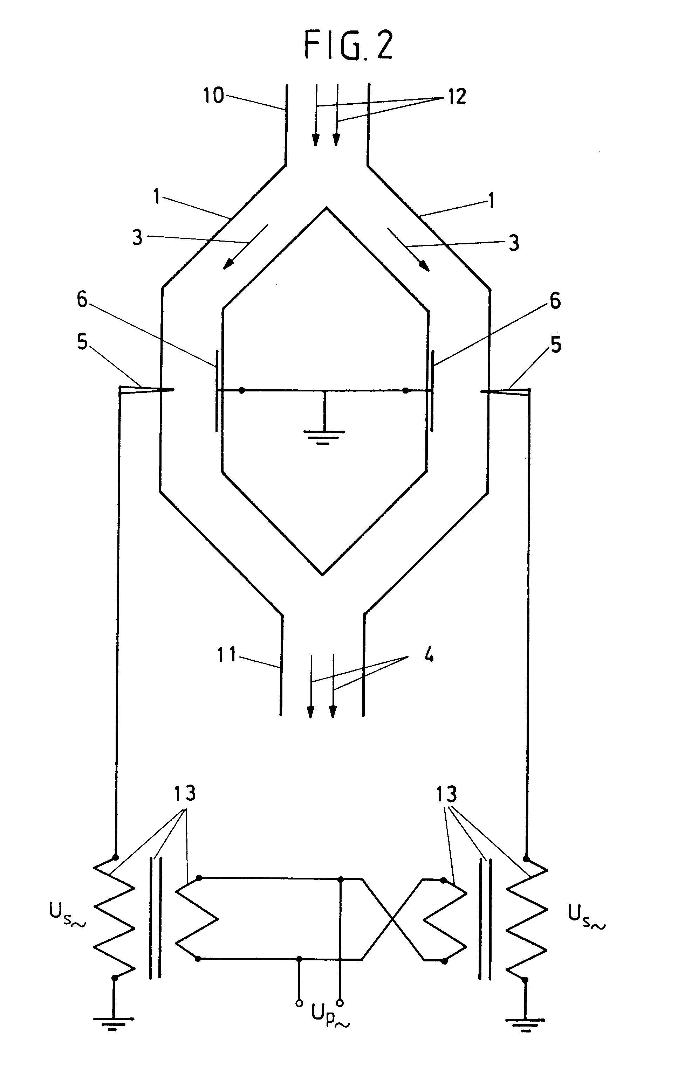

Fig. 2 zeigt den Aufbau einer Vorrichtung zur Durchführung des Verfahrens nach Fig. 1 in schematischer Weise. Der Eintrittskanal 10 führt den mit Partikeln beladenen Gesamtgasstrom 12 vor der Agglomeration. Der Kanal 10 verzweigt sich in zwei gleich grosse Kanäle 1 für die Teilgasströme 3. Die mit Spitzen 5 und Platten 6 versehenen, die Koronaentladung nutzenden Aufladevorrichtungen sind an die gegeneinander phasenverschobenen Sekundärspannungen $U_{s\sim}$ zweier Hochspannungstransformatoren 13 angeschlossen, welche mit der Primärspannung $U_{p\sim}$ gespeist werden. Der mit Partikeln beladene Gesamtgasstrom 4 verlässt die Anlage im Austrittskanal 11 nach der Agglomeration. Im vorliegenden Fall sind die Kanäle 1 symmetrisch und gleich lang ausgebildet und haben eine Querabmessung von ca. 50 mm. Die Geschwindigkeit der Teilgasströme 3 beträgt ca. 6 m/s. Die Spannung $U_{s\sim}$ beträgt hier ca. 20 kV. Die Primärspule des zweiten Transformators 13 ist gegenüber derjenigen des ersten Transformators gekreuzt an diese Spannungsquelle $U_{p\sim}$ von 220 V / 50 Hz angeschlossen, so dass das entsprechende elektrische Feld gerade im Gegentakt zum ersten Feld schwingt.

Aus der minimalen mathematischen Beziehung 2 f • l = V, mit

  f =  Frequenz
  l =  Axiale Länge der Aufladevorrichtung in Richtung des Gasstromes
  v =  Mittlere Geschwindigkeit des Gasstromes

resultiert die erforderliche Frequenz:

$$\frac{1}{f} \geqq 2\frac{l}{v}.$$

Ausführungsbeispiel:
‾ ‾ ‾ ‾ ‾ ‾ ‾ ‾ ‾ ‾

Siehe Fig. 2!

Die Anlage besass einen Eintrittskanal 10 aus Plexiglas mit quadratischem Querschnitt von 100 mm × 100 mm (Innenabmessungen). Die Kanäle 1 für die Teilgasströme 3 hatten je eine Länge in Strömungsrichtung von 750 mm und wiesen je einen Querschnitt von 100 mm × 50 mm auf. Die aus Spitze 5 und Platte 6 bestehenden Entladungsstrecken massen ca. 45 mm, wobei die Platte 6 in Strömungsrichtung eine Länge von 30 mm hatte. Die spitze 5 bestand aus einem rostfreien Stahl (V2A) und hatte einen Abrundungsradius von 0,8 mm. Die Platte 6 bestand aus Aluminium. Der Gasstrom 12 bestand aus Luft, in welcher 0,5 g/m³ Wachspartikel von einer mittleren Grösse von 4 μm suspendiert waren. Die Strömungsgeschwindigkeit eines Teilgasstromes 3 betrug ca. 6 m/s. Die Platten 6 lagen an Erdpotential während die Spitzen 5 je mit dem Hochspannungspol eines getrennten Hochspannungstransformators 13 ($U_{s\sim}$ = 20 $kV_{eff}$) verbunden waren, welche primärseitig im Gegentakt geschaltet waren. $U_{p\sim}$ = 220 $V_{eff}$; f = 50 Hz.

Die Messungen im Gesamtgasstrom 4 im Austrittskanal 11 ergaben einen hohen Grad von Agglomerierung der Partikel.

**Patentansprüche**

1.  Verfahren zur Agglomerierung von elektrisch ungleichnamig aufgeladenen, in Gasströmen suspendierten festen oder flüssigen Partikeln, wobei zwei Teilgasströme (3) vorgesehen sind, dadurch gekennzeichnet, dass in jedem Teilgasstrom die Partikel mittels einer durch je eine auf jeden Teilgasstrom (3) wirkende niederfrequente Wechselspannung U ausgelösten Koronaentladung zeitlich abwechslungsweise mit positiven und negativen Ionen beladen werden, derart, dass örtlich Folgen von abwechslungsweise positiven und negativen Partikelwolken (7, 8) gebildet werden und dass die beiden Teilgasströme (3) derart zusammengeführt werden, dass gleichzeitig eine positive Partikelwolke (7) des einen Teilgasstromes (3) mit einer negativen Partikelwolke (8) des anderen Teilgasstromes (3) zusammentrifft, und die positiven und negativen Partikel sich vereinigen und zu grossen Partikeln zusammenballen, wobei die Spannungen $U_\approx$ gegeneinander derart phasenverschoben sind, dass am Ort der Zusammenführung der beiden Teilgasströme (3) jeweils eine positive und eine negative Partikelwolke (7, 8) aufeinandertreffen.

2.  Vorrichtung zur Agglomerierung von elektrisch ungleichnamaig aufgeladenen, in Gasströmen suspendierten festen oder flüssigen Partikeln, dadurch gekennzeichnet, dass zwei V-förmig gegeneinander zulaufende, einen gemeinsamen Austrittskanal (11) aufweisende Kanäle (1) für je einen Teilgasstrom (3) mit je einer aus Spitzen (5) und Platten (6) bestehenden Koronaentladungseinrichtung für niederfrequente Wechselspannung $U_{S\approx}$ und zwei in Gegentakt arbeitende Hochspannungstransformatoren (13) vorgesehen sind.

**Claims**

1.  Method for agglomerating oppositely charged solid or liquid particles suspended in gas streams, two partial gas streams (3) being provided, characterised in that, in each partial gas stream, the particles are charged in each case by a corona discharge, which is initiated by a low-frequency alternating voltage $U_\approx$ [sic] acting on each partial gas stream (3), with positive and negative ions in an alternating manner with respect to time in a manner such that sequences of alternately positive and negative particle clouds (7, 8) are formed locally, and that the two partial gas streams (3) are brought together in a manner such that a positive particle cloud (7) of one partial gas stream (3) meets a negative particle cloud (8) of the other partial gas stream (3) simultaneously, and the positive and negative particles combine and conglomerate into large particles, the voltages $U_\approx$ [sic] being shifted in phase with respect to each other in a manner such that, at the point where the two partial gas streams (3) are brought together, a positive and a negative particle cloud (7, 8) on each occasion impinge on each other.

2. Device for agglomerating electrically oppositely charged solid or liquid particles suspended in gas streams, characterised in that two channels (1), each for a partial gas stream (3), converging on each other in a V shape and having a common exit channel (11) are in each case provided with a corona discharge device consisting of points (5) and plates (6) for low-frequency alternating voltage $U_{S\approx}$ [sic] and two high voltage transformers (13) operating in opposite phase.

**Revendications**

1. Procédé pour agglomérer des particules solides ou liquides portant des charges électriques de signes contraires et en suspension dans des flux gazeux, suivant lequel deux flux gazeux partiels (3) sont prévus, caractérisé en ce que, dans chaque flux gazeux partiel, les particules sont chargées en alternance d'ions positifs et négatifs au moyen d'une décharge en couronne déclenchée chaque fois par une tension alternative à basse fréquence $U_\approx$ agissant sur chacun des flux gazeux partiels, de façon telle que des successions locales de nuages de particules alternativement positifs et négatifs (7, 8) sont formées et que les deux flux gazeux partiels (3) sont rassemblés d'une manière telle que, simultanément, un nuage de particules positif (7) de l'un des flux gazeux partiels (3) rencontre un nuage de particules négatif (8) de l'autre flux gazeux partiel (3), et que les particules positives et négatives se réunissent et s'agglomèrent en de grosses particules, les tensions $U_\approx$ étant déphasées l'une par rapport à l'autre d'une manière telle qu'à l'endroit où les deux flux gazeux partiels (3) se rejoignent, un nuage de particules positif et un négatif (7, 8) se rencontrent chaque fois.

2. Dispositif pour agglomérer des particules solides ou liquides portant des charges électriques de signes contraires et en suspension dans des flux gazeux, caractérisé en ce que deux canaux (1) convergeant l'un vers l'autre en V et formant un canal de sortie commun (11), destinés chacun à un flux gazeux partiel (3) et pourvus chacun d'un dispositif de décharge en couronne constitué de pointes (5) et de plaques (6) pour une tension alternative à basse fréquence $U_{S\approx}$ et deux transformateurs haute tension travaillant en push-pull (13) sont prévus.

# FIG.1

# FIG. 2